Europäisches Patentamt

European Patent Office

Office européen des brevets

(19)

(11) Publication number: **0 151 981**
**A2**

(12) # EUROPEAN PATENT APPLICATION

(21) Application number: **85100719.5**

(22) Date of filing: **24.01.85**

(51) Int. Cl.⁴: **B 01 L 9/00**

(30) Priority: **08.02.84 FI 840519**

(43) Date of publication of application:
**21.08.85 Bulletin 85/34**

(84) Designated Contracting States:
**AT BE CH DE FR GB IT LI LU NL SE**

(71) Applicant: **EFLAB OY**
**Pulttitie 9**
**F-00810 Helsinki 81(FI)**

(72) Inventor: **Turkumäki, Terho**
**Kauriintie 4 R 137**
**F-00740 Helsinki(FI)**

(74) Representative: **Patentanwälte Müller-Boré, Deufel,**
**Schön, Hertel, Lewald, Otto**
**Isartorplatz 6**
**D-8000 München 2(DE)**

(54) **Method and device for the shifting of sample tubes.**

(57) Method and device for picking and shifting of sample tubes. In a method, a picking tip (4) is pushed into the mouth of the tube, which picking tip (4) engages the inside face of the tube mouth by the effect of friction. Besides the tip, the device also includes a glide member (6), by means of which the test tube grasped is pushed apart from the tip.

EP 0 151 981 A2

./...

Fig .1.

Method and device for the shifting of sample tubes

The present invention is concerned with a method and a device for the shifting of test tubes that contain samples or reagents in a laboratory.

In laboratories, the sample tubes are, at present, picked out of their stands by fingers or by means of tweezers. The lifting by means of fingers is rapid if there is space enough between the tubes in the stand. If the tube is not accessible by fingers or if it is to be ensured that the fingers do not reach contact with the liquid in the tube, tweezers must be used. Picking by means of tweezers is, however, difficult and slow.

It is an object of the present invention to provide a method by means of which sample tubes can be picked up and shifted from their stands rapidly and safely.

In the method of the present invention, the sample tubes are shifted by means of a particular picking tool, whose tip grasps the inside face of the mouth of the tube or of a recess provided in the stopper of the test tube by the effect of friction. The picking tool additionally includes a detaching member, by means of which the test tube is pushed from above apart from the grasping tip.

By means of the device in accordance with the invention, it is easy and rapid to shift even small sample tubes, no matter how tightly the tube stand is packed. Moreover, the operator is protected from the liquid present in the tube, and desinfection of the device is easy.

A preferred embodiment of the invention will be illustrated in more detail by means of the attached drawings, wherein

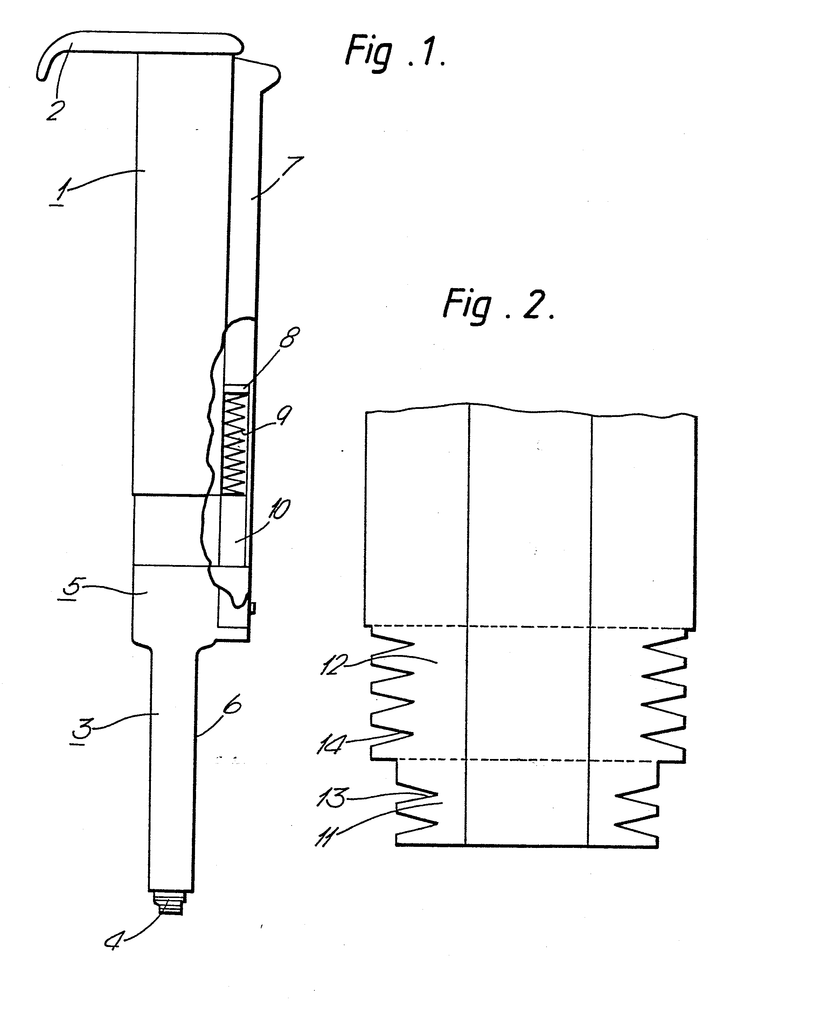

Figure 1 is a side view of the picking tool, and

Figure 2 is an enlarged view of the picking tip of the device.

The picking tool in accordance with the drawings comprises a cylindrical body 1, which, at the same time, functions as a handle. The top end of the body is provided with a projection 2, which improves the handling quality of the device. The lower end of the body is connected with a thinner cylindrical tip portion 3, whose bottom end constitutes the picking tip 4. The device further comprises a detaching member 5, which consists of a sleeve portion 6 fitted as gliding around the bottom portion of the body, and a rod 7 attached to the sleeve portion 6, parallel to the body and located at the side of the body. In a groove 8 provided inside the rod 7, there is a spring 9, one of whose ends rests against the upper end of the groove 8, whereas the other end of the spring rests against a limiter 10 attached to the body 1 and fitted as gliding in the groove 8.

The picking tip comprises two concentric cylinders 11 and 12 of different diameters, fitted one after the other; the lower one of the said cylinders, with smaller diameter 11, is fitted so as to grasp the recess in the stopper of a test tube, and the upper one, with larger diameter 12, to grasp the inside face of the sample tube. The faces of the grasping cylinders 11 and 12 are provided with annular grooves 13 and 14 placed along the circumference, which facilitate the centering and engagement of the faces.

The picking tip should preferably be dimensioned so that the tip is not even unintentionally pushed excessively deep into the tube and into contact with the sample.

Moreover, the shape of the picking tip 3 is a downwardly open tube, whereby it is achieved that no positive pressure is generated when the tip is pushed into the tube or stopper.

When sample tubes are shifted, the tip 3 is pushed into engagement with the mouth of the tube or with the stopper, the tube is lifted and shifted to the desired location, and the top end of the rod 7 is depressed, whereby the glide sleeve 6 presses the tube apart from the picking tip 4. The spring 9 restores the sleeve 6 to its upper position for the following picking operation.

If desired, it is also possible to connect several picking tips into one frame so as to pick several test tubes at the same time.

0151981

WHAT IS CLAIMED IS:

1. Method for the picking and shifting of sample tubes, c h a r a c t e r i z e d  in that the tubes are grasped by pushing a picking member (4) either into the mouth of the tube or into a recess provided in the top face of a stopper attached to the mouth of the tube, which said picking member (4) grasps the wall of the tube mouth or the mouth of the recess in the stopper, respectively, by the effect of friction.

2. Device for the shifting of test tubes, c h a r a c t e r i z e d  in that the device comprises a body (1), a vertical tip portion (3) attached to the lower end of the body, and a glide member (6) fitted as gliding in the longitudinal direction along the outer face of the tip portion, the lower end of the said glide member (6) being placed higher than the lower end of the tip portion when the glide member is in its upper position, and lower than the lower end of the tip portion when the glide member is in its lower position.

3. Device as claimed in claim 2, c h a r - a c t e r i z e d  in that the tip portion is cylindrical.

4. Device as claimed in claim 3, c h a r - a c t e r i z e d  in that the glide member is sleeve-shaped.

5. Device as claimed in claim 3 or 4, c h a r a c t e r i z e d  in that the tip portion is hollow and open at its lower end.

6. Device as claimed in any of claims 3 to 5, c h a r a c t e r i z e d  in that the lower end of the tip portion is provided with a picking tip (4) whose diameter is smaller than the diameter of the rest of the tip portion.

7.  Device as claimed in any of claims 3 to 6, c h a r a c t e r i z e d  in that the picking tip is provided with annular grooves (13, 14) placed along the circumference of the cylinder.

8.  Device as claimed in claim 6 or 7, c h a r a c t e r i z e d  in that the picking tip consists of two concentric cylinders (11,12) placed one after the other and having different diameters, the lower one of the said cylinders having the smaller diameter.

9.  Device as claimed in any of claims 2 to 8, c h a r a c t e r i z e d  in that the glide member is provided with a rod (7) attached to the body and fitted as gliding along the body.

10.  Device as claimed in claim 9,  c h a r - a c t e r i z e d  in that the device includes a spring (9) for restoring the rod to its upper position.

0151981

Fig .1.

Fig .2.